# EUROPÄISCHE PATENTANMELDUNG

(11) **EP 1 882 677 A1**
(43) Veröffentlichungstag der Anmeldung: **30.01.2008**
(21) Anmeldenummer: 06015852.4
(22) Anmeldetag: 29.07.2006
(51) Int. Cl.: C02F 3/28, C02F 1/52

(54) **Anlage zur Vorreinigung von Schmutzwässern mit integrierter Weiterbehandlung der Feststoffe**

(71) Anmelder: Böttcher, Joachim, 67822 Hengstbacherhof (DE)
(72) Erfinder: Böttcher, Joachim, 67822 Hengstbacherhof (DE)
(74) Vertreter: Patentanwälte Möll und Bitterich

(57) **Zusammenfassung**

Die vorliegende Erfindung betrifft eine Anlage zur Reinigung von Abwässern ohne Entstehung von Klärschlamm, bei der eine Abtrennung von Grob- bzw. Feststoffen unter Verwendung eines Grobstoffrottefilters stattfindet, die aus mindestens einem Schacht, einer Abwasserzulaufvorrichtung, sowie einem eine Filterschicht aufweisenden Rottebehälter nebst einer Ablaufvorrichtung für das gereinigte Wasser besteht,
dadurch gekennzeichnet,
dass eine Vorrichtung zur Durchführung einer anaeroben Fermentation (2) in Kombination mit einer Sedimentationsanlage (3) angeordnet ist.

## Beschreibung

Gegenstand vorliegender Erfindung ist eine erweiterte Anlage zur Reinigung von Abwässern ohne Entstehung von Klärschlamm.

Der nächstkommende Stand der Technik ist im Deutschen Patent 197 37 691 offenbart, in dem eine Anlage zur Reinigung von Abwässern ohne Entstehung von Klärschlamm beschrieben ist, bei der eine Abtrennung von Grob- bzw. Feststoffen unter Verwendung eines Grobstoffrottefilters stattfindet, wobei diese Anlage aus mindestens einem Schacht, der eine Abwasserzulaufvorrichtung, einen eine Filterschicht aufweisenden Rottebehälter sowie eine Ablaufvorrichtung für das gereinigte Wasser beinhaltet, besteht.

Es wurde nun überraschenderweise gefunden, dass an Stelle der aeroben Rotte zur Verbesserung der Endprodukte ein anaerober Fermentationsprozess treten kann, wobei das fermentierte Material, nämlich die Feststoffe aus dem Schmutzwassersich durch eine besonders homogene Struktur auszeichnet und für die landwirtschaftliche oder gartenbauliche Verwertung optimal geeignet ist. Die in den Feststoffen enthaltenen Nährstoffe werden beim anaeroben Fermentationsprozess aufgeschlossen und sind dadurch besser von den Pflanzen aufnehmbar.

Zudem weist das fermentierte Material eine bodenverbessemde und humusbildende Wirkung auf. Hinzu kommt eine effektive Eliminierung der pathogenen Mikroorganismen, weil der pH-Wert während des Fermentationsprozesses sehr stark, nämlich unter pH 4 abgesenkt wird.

Das Schmutzwasser wird beispielsweise per Freigefällse oder per Pumpe in Behälter. Schachte oder Becken eingebracht, wo es über die Behälter- oder Schachtsohle oder über Öffnungen in den Wänden permanent entwässert wird. Eine organische Filterschüttung oder ein siebähnlicher Filter aus Kunststoff oder Metall sorgt für die Entwässerung am Boden. Das Filtrat bzw. gefilterte Abwasser kann anschließend noch in einen Sedimentationsbereich geleitet werden, wo die im Behälter oder Schacht nicht herausgefilterten Feststoffe durch Sedimentation zurückgehalten werden. Dadurch wird eine noch effektivere Vorreinigungsteistung erreicht, die insbesondere in Verbindung mit einem nachfolgenden Bodenfilter (zur biologischen Reinigung) sinnvoll ist, um beispielsweise Verstopfungen des Bodenfilters vorzubeugen.

Während des Betriebes können zur Verbesserung der Entwässerungsleistung und Optimierung des Endproduktes organische Kohlenstoffträger (Stroh, Holzhäcksel, Holzspäne, Röhricht usw.) hinzugefügt werden. Zudem können während des Betriebes spezielle Mikroorganismen zugeführt werden, die während des Betriebes, aber vor allem in der anschließenden Fermentierungsphase zu besseren Ergebnissen führen.

Wenn ein Schacht , Behälter oder Becken mit Feststoffen aufgefüllt ist, wird der Abwasserzulauf auf einen weiteren Schacht oder Behälter umgestellt, welcher nun wie der Erste betrieben wird. Im ruhenden Schacht oder Behälter oder Becken wird nun die Fermentierungsphase eingeleitet. Zur Optimierung der Fermentation können den Feststoffen spezielle Mikroorganismen zugeführt werden und/oder ein Luftabschluss durch Abdeckung und/oder Verschluss der Zu- und Abläufe vorgenommen werden. Nach abgeschossener Fermentation können die Feststoffe aus dem Behälter oder Schacht oder Becken entnommen werden und einer Verwertung zugeführt werden.

Der Behälter oder Schacht oder Becken kann nach der Entleerung wieder in Betrieb genommen werden, d.h.Schmutzwasser bzw. das Abwasser kann wieder zugeführt werden und der bisher in Betrieb befindliche Behälter oder Schacht oder Becken kann in die Ruhephase übergehen.

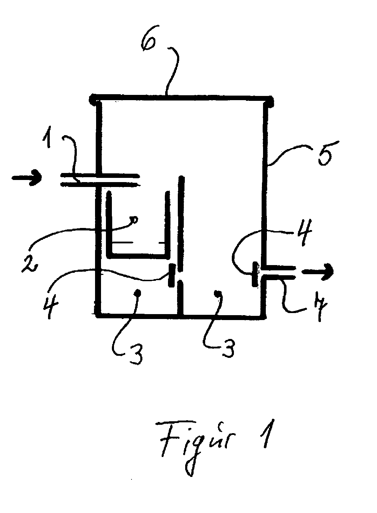

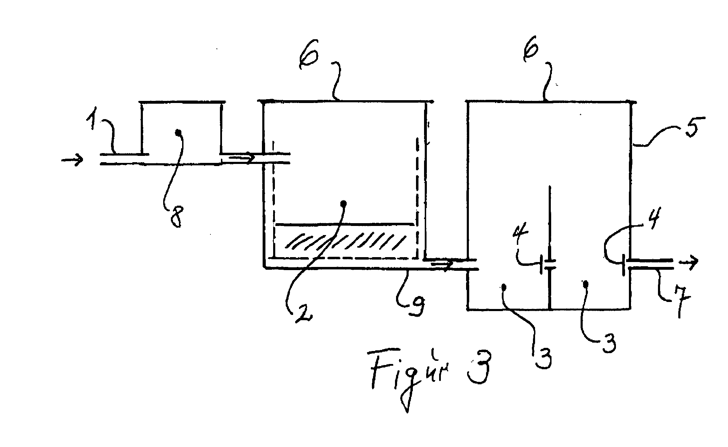

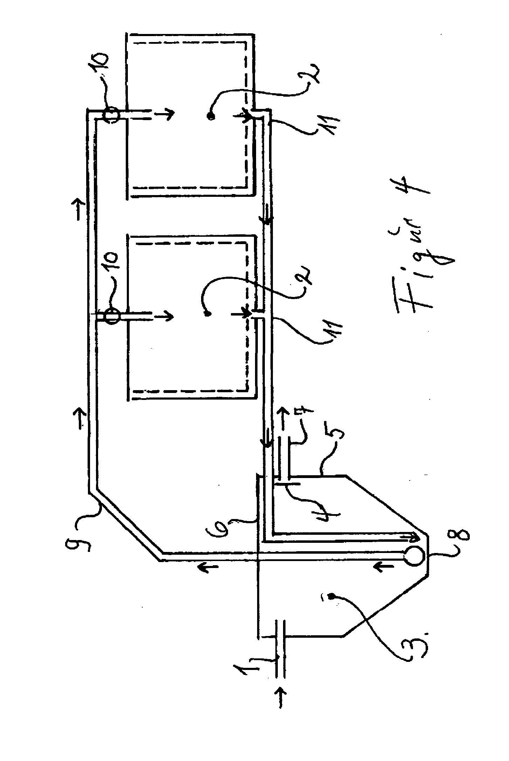

Der Gegenstand vorliegender Erfindung wird nun anhand der beiliegenden Figuren 1 - 4 weiterhin erläutert

Ein Beispiel dieser Anlage ist in der beiliegenden Figur 1 dargestellt, wobei die Einzelelemente durch Ziffern gekennzeichnet sind und folgende Bedeutung haben
Zulauf (1)
Rotte- und/oder Fermentationsbereich (2)
Sedimentationsbereich (3)
Vorrichtung zur Rückhaltung von Schwimmschlamm (4)
Schacht, Behälter oder Becken (5)
Abdeckung mit Öffnung (6)
Ablauf (7)

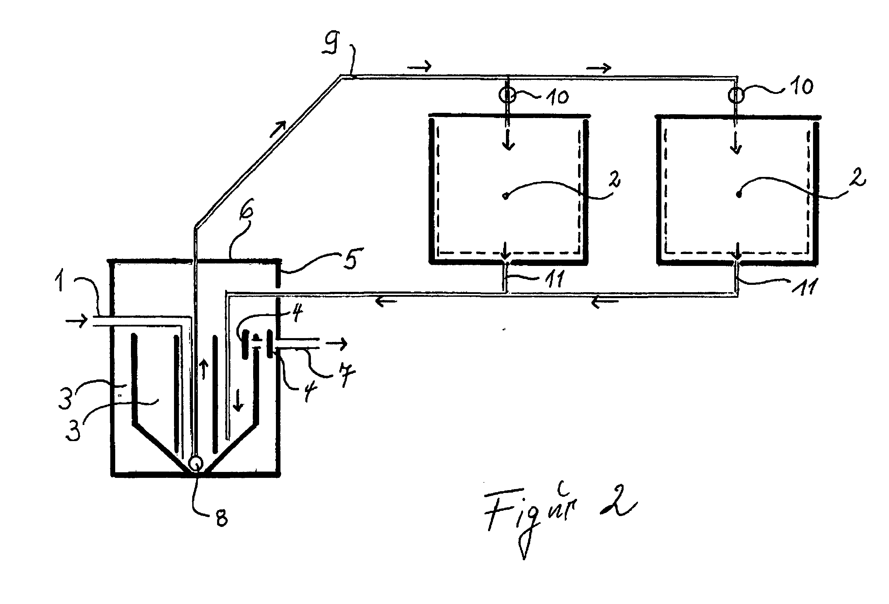

Es folgt die Bezugsziffernliste der weiteren Ausführungsbeispiele gemäss der Figuren 2 bis 4 :
**Figur 2**
   Zulauf (1)
   Rotte- und/oder Fermentationsbereich (2)
   Sedimentationsbereich (3)
   Vorrichtung zur Rückhaltung von Schwimmschlamm (4)
   Schacht, Behälter oder Becken (5)
   Abdeckung mit Öffnung (6)
   Ablauf (7)
   Pumpe und/oder Hebeanlage (8)
   Leitung zur Befüllung der Rotte- oder Fermentationsbehälter (9)
   Vorrichtung zur Umstellung der Behälter (10)
   Ablaufvorrichtung für Sickerwasser (11)
**Figur 3**
   Zulauf (1)
   Rotte- und/oder Fermentationsbereich (2)
   Sedimentationsbereich (3)
   Vorrichtung zur Rückhaltung von Schwimmschlamm (4)
   Schacht, Behälter oder Becken (5)
   Abdeckung mit Öffnung (6)
   Ablauf (7)
   Vorrichtung zur Umstellung der Behälter (8)
   Ablaufvorrichtung für Sickerwasser (9)
**Figur 4**
   Zulauf (1)
   Rotte- und/oder Fermentationsbereich (2)
   Sedimentationsbereich (3)
   Vorrichtung zur Rückhaltung von Schwimmschlamm (4)
   Schacht, Behälter oder Becken (5)
   Abdeckung mit Öffnung (6)
   Ablauf (7)
   Pumpe und/oder Hebeanlage (8)
   Leitung zur Befüllung der Rotte- oder Fermentationsbehälter (9)
   Vorrichtung zur Umstellung der Behälter (10)
   Ablaufvorrichtung für Sickerwasser (11)

In kombinatorischer Verzahnung wird weiterhin erfindungsgemäß vorgeschlagen, dass eine Sedimentationsanlage, z.B. ein Absetzbecken und/oder ein Absetzteich und/oder ein Dortmundbrunnen und/oder eine Mehrkammergrube vorgeschaltet werden.

Die dort sedimentierenden Feststoffe werden mit einer Pumpe oder anderen Fördereinrichtungen aus der Sedimentationsanlage abgezogen und direkt in die Behälter oder Schächte eingeleitet. Die Behälter oder Schächte verfügen in jedem Fall über Entwässerungs- und Filtervorrichtungen, wie oben beschrieben, damit die Feststoffe zurückgehalten werden und die flüssige Phase abfließen kann. Die flüssige Phase kann in die Sedimentationsanlage zurückgeführt werden. Von der Sedimentationsanlage aus kann das mechanisch und/oder teilbiologisch vorbehandelte Abwasser in weitere biologische Behandlungsstufen gebracht werden.

Durch den gezielten Abzug der Feststoffe aus der Sedimentation werden nur geringe Anteile des gesamten zufließenden Abwassers tatsächlich über die Behälter oder Schächte des Verfahrens geleitet. Dadurch werden die Filterprozesse hydraulisch nicht zu stark beansprucht und die Entwässerungsleistung verbessert.

Auch bei dieser Betriebs- bzw. Verfahrensweise mit der vorgeschalteten Sedimentation können nach der Befüllung eines Schachtes oder Behälters mit Feststoffen entweder Rotteprozesse oder Fermentationsprozesse eingeleitet werden.

## Patentansprüche

1. Anlage zur Reinigung von Abwässern ohne Entstehung von Klärschlamm, bei der eine Abtrennung von Grob- bzw. Feststoffen unter Verwendung eines Grobstoffrottefilters stattfindet, die aus mindestens einem Schacht, einer Abwasserzulaufvorrichtung, sowie einem eine Filterschicht aufweisenden Rottebehälter nebst einer Ablaufvorrichtung für das gereinigte Wasser besteht,
**dadurch gekennzeichnet,**
**dass** eine Vorrichtung zur Durchführung einer anaeroben Fermentation (2) in Kombination mit einer Sedimentationsanlage (3) angeordnet ist.

2. Anlage nach Anspruch 1,
**dadurch gekennzeichnet,**
**dass** die Sedimentationsanlage (3) aus einem Absetzbecken und/oder einem Absetzteich und/oder einem Dortmundbrunnen und/oder Mehrkammergruben besteht.

3. Anlage nach Anspruch 1 - 2
**dadurch gekennzeichnet,**
**dass** sie eine Zugabevorrichtung für organische Kohlenstoffträger aufweist.
